# EUROPÄISCHE PATENTSCHRIFT

(11) **EP 0 940 344 B1**
(45) Veröffentlichungstag und Bekanntmachung des Hinweises auf die Patenterteilung: **05.11.2003**
(21) Anmeldenummer: 99103145.1
(22) Anmeldetag: 18.02.1999
(51) Int. Cl.: B65B 67/12

(54) **Verfahr- und arretierbare Sammelvorrichtung**
Mobile collection device provided with brakes
Appareil collecteur mobile muni de freins

(30) Priorität: 05.03.1998 DE 19809331
(43) Veröffentlichungstag der Anmeldung: 08.09.1999
(73) Patentinhaber: Winkler, Winfried, 52076 Aachen (DE)
(72) Erfinder: Winkler, Winfried, 52076 Aachen (DE)
(74) Vertreter: Kohlmann, Kai, Dipl.-Ing.

(56) Entgegenhaltungen:
- EP-A- 0 672 588
- DE-A- 2 262 837
- DE-U- 8 526 756
- FR-A- 804 974
- US-A- 3 313 377
- US-A- 4 593 873

## Beschreibung

Die Erfindung betrifft eine verfahr- und arretierbare Sammelvorrichtung mit einem Fahrgestell und einer einen Verschluß aufweisenden Öffnung, einem um eine horizontale, an dem Fahrgestell angeordneten Achse drehbaren Hebel mit einem Fußteil, der beim Niedertreten eine Bremseinrichtung gegen den Boden drückt und gleichzeitig den Verschluß öffnet.

Aus der DE 27 01 944 A1 ist eine Sammelvorrichtung mit einer Halterung für Säcke bekannt, wobei der den oberen Sackrand tragende Vorrichtungsteil aus zwei in horizontaler Ebene gegeneinander federnden, in ihrer Ausgangslage parallel zueinander gelegenen und an ihren Enden miteinander schwenkbar verbundenen Federleisten besteht.

Das Öffnen dieser beiden Leisten, die den Sackhalteteil bilden, erfolgt dadurch, daß eine der beiden Leisten mittels eines Schwenkhebels mit Fußteil auswärts bewegt wird. Dieser Schwenkhebel besteht aus einem etwa L-förmigen, gebogenen Rahmen, der in seinem unteren Abschnitt in dem verfahrbaren Vorrichtungsgestell schwenkbar gelagert ist und dessen Fußteil aus einer horizontalen Strebe des Rahmens besteht.

Bei dieser bekannten verfahrbaren Sammelvorrichtung ist vorgesehen, daß der Schwenkhebel mit einer Bremseinrichtung verbunden ist. Die Bremseinrichtung besteht aus einer Federeinrichtung mit einem Bremsklotz, der beim Niederdrücken des Fußhebels auf dem Fußboden aufsetzt und hierdurch ein Verschieben der verfahrbaren Sammelvorrichtung verhindert.

Eine gegenüber diesem Stand der Technik verbesserte verfahrund arretierbare Sammelvorrichtung geht aus der DE 35 12 811 C1 hervor. Die Verbesserung besteht darin, daß bereits nach kurzem Treten des Fußhebels die Arretiervorrichtung, mit deren Hilfe die Sammelvorrichtung unverfahrbar gemacht wird, zur Wirkung kommt und danach die Bewegung des Fußhebels fortgesetzt werden kann, um den Öffnungsvorgang eines Deckels oder des elastisch verformbaren Sackhalteteils ohne Einfluß auf den Arretiervorgang zu vollenden. Dabei soll der weitere Öffnungsvorgang des Deckels oder des Sackhalteteils keine nennenswerte zusätzliche Kraft, beispielsweise für die Überwindung einer steigenden Kraft einer zusätzlichen, starken Feder erfordern.

Diese Verbesserung wird im wesentlichen durch eine gemeinsame Betätigungsvorrichtung für das Arretieren der Sammelvorrichtung und für das vollständige Öffnen des Deckels oder des Sackhalteteils gelöst, wobei nach Zurücklegen eines bestimmten Weges der Betätigungsvorrichtung nur noch die Öffnungseinrichtung weiter beaufschlagt wird, während die Arretiereinrichtung dagegen vergleichsweise entkuppelt in ihrer erreichten Lage verharrt. Als Mittel hierfür finden aufeinander abgleitende bzw. abrollende Teile Anwendung, beispielsweise ein mit dem Fußteil starr verbundener Ansatz, dessen freies Ende auf einer federnd biegsamen, am Vorrichtungsgestell schwenkbar gelagerten Leiste in deren Längsrichtung gleitend aufsitzt, wobei die Leiste einen gegen den Boden drückbaren Brems- und Arretierbügel besitzt. Nach dem Aufsitzen des Bügels auf dem Boden und dem Arretieren der Sammelvorrichtung kann ein vollständiges Öffnen des Deckels oder des Sackhalteteils erfolgen, indem der Ansatz unter federndem Durchbiegen der Leiste weiter auf dieser abgleitet.

Ausgehend von der Sammelvorrichtung nach der DE 35 12 811 C1 liegt der Erfindung die Aufgabe zugrunde, eine Sammelvorrichtung zu schaffen, die es ebenfalls ermöglicht, den weiteren Öffnungsvorgang des Verschlusses des Sammlers nach Wirksamwerden der Bremseinrichtung ohne nennenswerte zusätzliche Kräfte zu vollenden, jedoch konstruktiv einfacher ist, insbesondere ohne verschleißanfällige, aufeinander abgleitende bzw. abrollende Teile auskommt und infolgedessen wartungsärmer bzw. wartungsfrei ist.

Die Lösung dieser Aufgabe beruht auf der Erkenntnis, daß auf eine federnd biegsame Leiste und darauf abgleitende Teile verzichtet werden kann, wenn man nach dem Wirksamwerden der Bremseinrichtung ein Abheben der dem fußbetätigten Hebel fernen Fahr- oder Lenkrollen vom Boden in Kauf nimmt. Bei der Erprobung der erfindungsgemäßen Sammelvorrichtung hat sich überraschend gezeigt, daß es für die Standsicherheit keineswegs abträglich ist, daß die Sammelvorrichtung lediglich auf zwei Rollen und im übrigen auf den beispielsweise als Bremsklötzen ausgestalteten Mitteln zum Bremsen ruht. Insbesondere bei nicht völlig ebenen Böden, wie sie häufig in Altbauten anzutreffen sind, ergeben sich aus diesem Effekt sogar Vorteile für die Standsicherheit der Sammelvorrichtung und die Wirksamkeit von deren Bremseinrichtung.

Im einzelnen wird die Aufgabe bei einer Sammelvorrichtung der eingangs erwähnten Art dadurch gelöst, daß der Hebel im Abstand von seiner Achse in Richtung des Fußteiles mit mindestens einer Betätigungsstange gelenkig verbunden ist, daß jede Betätigungsstange außerdem mit einem Hebelarm eines zweiseitigen, um eine horizontale, an dem Fahrgestell angeordnete Achse drehbaren Bremshebels gelenkig verbunden ist und daß an dem anderen Hebelarm jedes Bremshebels auf den Boden wirkende Mittel zum Bremsen angeordnet sind.

Je nach Ausführung der Sammelvorrichtung kann der Hebel mit Fußteil als zwei- oder einseitiger Hebel ausgeführt sein.

Vorzugsweise besitzt die Sammelvorrichtung zwei Betätigungsstangen, die beide auf einen Hebelarm des Bremshebels wirken. Um bei relativ breiten Sammlern Gewicht einzusparen, können jedoch statt eines relativ breiten Bremshebels beispielsweise zwei um eine gemeinsame horizontale Achse oder auch getrennte, jedoch fluchtende, horizontale Achsen drehbar angeordnete Bremshebel vorgesehen sein, wobei jeder dieser Bremshebel mit einer Betätigungsstange gelenkig verbunden ist. In Frage kommt eine eigene Betätigungsstange je Bremshebel, aber auch eine gemeinsame, sich vor den Bremshebeln gabelförmig auf diese aufteilende Betätigungsstange.

Ist der Sammler als Sackhalter und der Hebel mit Fußteil als zweiseitiger Schwenkhebel mit einem Schwenkteil ausgebildet, kann in an sich aus der DE 27 01 944 A1 sowie der DE 35 12 811 C1 bekannter Weise durch das Schwenken ein den oberen Sackrand haltendes, elastisch verformbares Tragteil geöffnet bzw. geschlossen werden. Wegen der Funktion des synchronen Öffnens des elastisch verformbaren Tragteils mit dem Niedertreten des Hebels mit Fußteil wird ausdrücklich auf die beiden vorgenannten Fundstellen zum Stand der Technik verwiesen.

Die erfindungsgemäße Sammelvorrichtung erlaubt jedoch abweichend vom Stand der Technik nicht nur den Einsatz von Säcken in einem Sammler, sondern auch von Behältern, beispielsweise aus Stahlblech, Edelstahl, Aluminium oder Kunststoff. Als Verschluß besitzen die Behälter einen seitlich und hinten scharnierten Tretdeckel mit einem Ansatz für ein Zugmittel, das an seinem, dem Ansatz gegenüberliegenden, unteren Ende mit dem die Mittel zum Bremsen tragenden Hebelarm des Bremshebels bzw. von einem der Bremshebel verbunden ist.

Der Begriff Zugmittel ist dahingehend zu verstehen, daß das Mittel zur Bewegungsübertragung zumindest gegen Zugbeanspruchung widerstandsfähig ist, wie beispielsweise Seile, Riemen und Ketten. Mit umfaßt von dieser Definition sind selbstverständlich solche Zugmittel, die auch Druckkräfte übertragen können, wie beispielsweise Stangen.

Der Behälter kann beispielsweise auf einem als Rohrrahmen ausgestalteten oder einem eine Grundplatte aufweisenden Fahrgestell angeordnet sein. Zur Gewichts-, Material- und damit Kostenersparnis ist es jedoch auch möglich, daß das Fahrgestell integraler Bestandteil des Behälters ist, indem unmittelbar an dessen Boden Aufnahmen für die Achsen des Hebels mit Fußteil, jedes Bremshebels sowie von Befestigungsmitteln für Fahr- und/oder Lenkrollen der Sammelvorrichtung angeordnet sind.

Um die Bremseinrichtung, insbesondere den Abstand der bei arretierter Sammelvorrichtung vom Boden abgehobenen Lenkrollen zum Boden justieren zu können, ist die Achslage jedes Bremshebels und/oder des Hebels mit Fußteil und/oder die Länge jeder Betätigungsstange einstellbar. Regelmäßig genügt eine der vorgenannten Einstellmöglichkeiten zur Justage der Bremseinrichtung, die beispielsweise bei der Inbetriebnahme der Sammelvorrichtung oder aufgrund zunehmenden Verschleißes der Bremsklötze erforderlich sein kann. Eine konstruktiv einfache Verstellmöglichkeit ergibt sich, wenn die Achslage jedes Bremshebels und/oder des Hebels mit Fußteil mittels am Fahrgestell schwenk- und drehbar unter unterschiedlichen Schwenkwinkeln fixierbar gelagerten Achsaufnahmen einstellbar ist.

Die Mittel zum Bremsen können in Form einer sich über die gesamte Breite jedes Bremshebels erstreckenden Leiste, jedoch auch in Form von Klötzen bzw. Rundprofilen lediglich punktuell an dem Bremshebel angeordnet sein.

In den Zeichnungen sind Ausführungsbeispiele der erfindungsgemäßen Sammelvorrichtung dargestellt.

Es zeigen
- Figur 1: eine erste Ausführungsform einer erfindungsgemäßen Sammelvorrichtung mit einer Federleiste als Verschluß und Halterung eines Sacks in nicht arretierter Position
- Figur 2: eine Sammelvorrichtung nach Figur 1 in arretierter Position mit geöffneter Federleiste
- Figur 3: eine zweite Ausführungsform einer erfindungsgemäßen Sammelvorrichtung mit einem Tretdeckel als Verschluß eines Behälters in nicht arretierter Position
- Figur 4: eine Sammelvorrichtung nach Figur 3 in arretierter Position mit geöffnetem Tretdeckel
- Figur 5: eine perspektivische Teilansicht einer dritten Ausführungsform einer erfindungsgemäßen Sammelvorrichtung mit Verschluß und Halterung entsprechend der Ausführungsform nach Figur 1, jedoch mit einem rohrförmigen Fahrgestell
- Figur 6: eine perspektivische Teilansicht entsprechend Figur 5, jedoch mit zwei schmalen Bremshebeln ohne Darstellung von deren Achsaufnahmen
- Figur 7: eine schematische Seitenansicht einer einstellbaren Achsaufnahme für einen Bremshebel in arretierter Position.

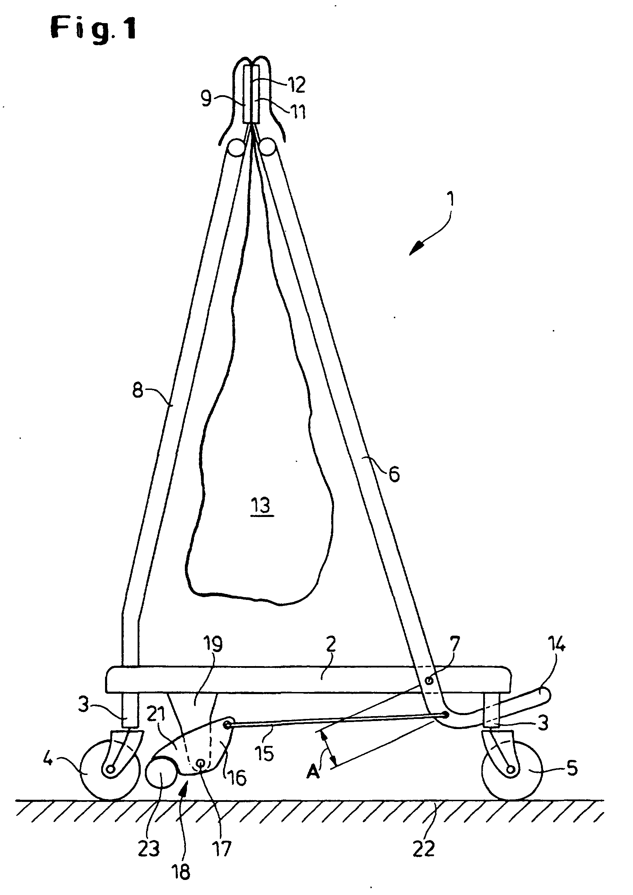

Die insgesamt mit 1 bezeichnete verfahr- und arretierbare Sammelvorrichtung nach Figur 1 umfaßt ein aus einer Bodenplatte 2 mit Steckhülsen 3 für Lenkrollen 4, 5 gebildetes Fahrgestell, an dem schwenkbar ein zweiseitiger L-förmiger Schwenkhebel 6 mit einem Fußteil 14 um eine Drehachse 7 angeordnet ist. Oberhalb der Bodenplatte 2 in Verlängerung der Steckhülsen 3 der Lenkrollen 4 erstrecken sich zwei parallele Holme 8, deren oberen Enden in an sich bekannter. Weise eine federnd verformbare Leiste 9 tragen.

Der L-förmige Schwenkhebel 6 ist an seinem oberen Ende ebenfalls in an sich bekannter Weise mit einer zweiten federnd verformbaren Leiste 11 verbunden. Die beiden Leisten 9, 11, die in horizontaler Ebene biegesteif sind, sind derart an ihren Enden miteinander verbunden, daß sie unter Bildung einer ungefähr ovalen Öffnung voneinander fortbewegt und in ihre aneinander liegende parallele Verschlußlage gebracht werden können, wozu ihre Enden mit Scharnieren 12 versehen sind.

Um die beiden Leisten 9, 11 wird der obere Rand eines Sacks 13 mit einer Öffnung 28 kragenartig gelegt, so daß beim Öffnen bzw. Schließen der beiden Leisten 9, 11 ein Öffnen des Sacks 13 erfolgt, sobald das Fußteil 14 des L-förmigen Schwenkhebels 6 niedergetreten wird.

Im Abstand A von der Drehachse 7 in Richtung des Fußteils 14 ist eine Betätigungsstange 15 gelenkig an dem L-förmigen Schwenkhebel 6 angeordnet. An ihrem anderen Ende ist die Betätigungsstange 15 an einem Hebelarm 16 eines zweiseitigen, um eine horizontale Achse 17 drehbaren Bremshebels 18 angelenkt. Die horizontale Achse 17 ist in einer mit der Bodenplatte 2 verbundenen Achsaufnahme 19 gelagert. An einem weiteren Hebelarm 21 des Bremshebels 18 ist ein die Reibung gegen den Boden 22 erhöhender, kugelförmiger Bremsbelag 23 angeordnet.

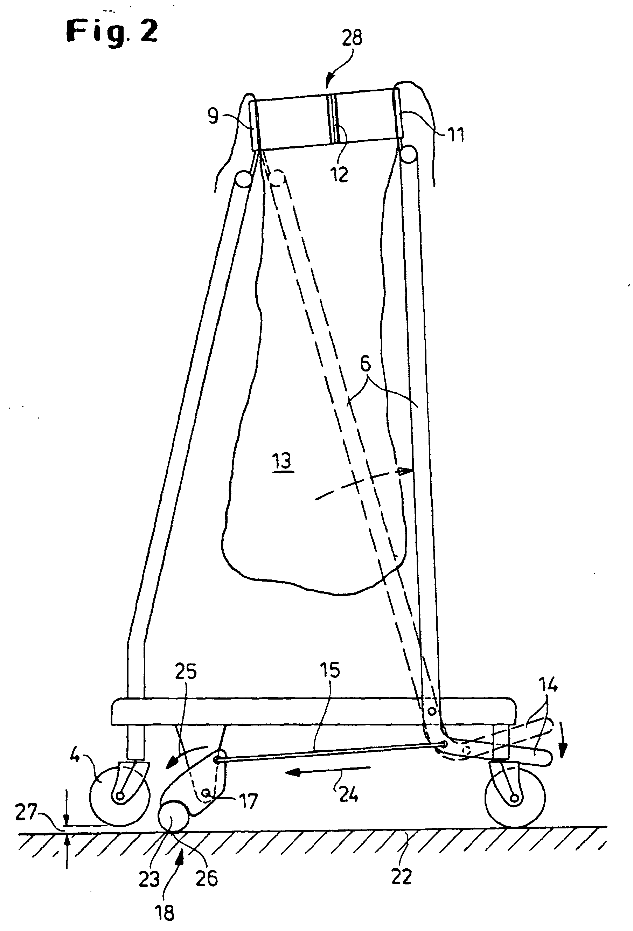

Beim Niedertreten des Fußteils 14 bewegt sich die Betätigungsstange 15 in Pfeilrichtung 24 (vgl. Figur 2) und versetzt damit den Bremshebel 18 in eine Rotation um seine horizontale Achse 17 in Pfeilrichtung 25, bis der Bremsbelag 23 an einem Berührpunkt 26 auf dem Boden 22 aufsetzt. Im weiteren Verlauf des Niedertretens kommt es zu einem Anheben der Lenkrollen 4 um den Hubweg 27. Die gestrichelt dargestellten Linien des L-förmigen Schwenkhebels 6 in Figur 2 zeigen die in Figur 1 dargestellte Ausgangslage, während die ausgezogenen Linien die Endlage des Schwenkhebels 6 bei völlig niedergetretenem Fußteil 14 verdeutlichen. Die Leisten 9, 11 sind auseinandergezogen und geben die Öffnung 28 des Sacks 13 vollständig frei.

In der Beschreibung der nachfolgenden Ausführungsbeispiele sind funktions- und wirkungsgleiche Bauteile weitgehend mit übereinstimmenden Positionsziffern wie in den Figuren 1 und 2 gekennzeichnet. Insoweit wird auch auf die Erläuterung zu dem Ausführungsbeispiel nach Figuren 1 und 2 Bezug genommen.

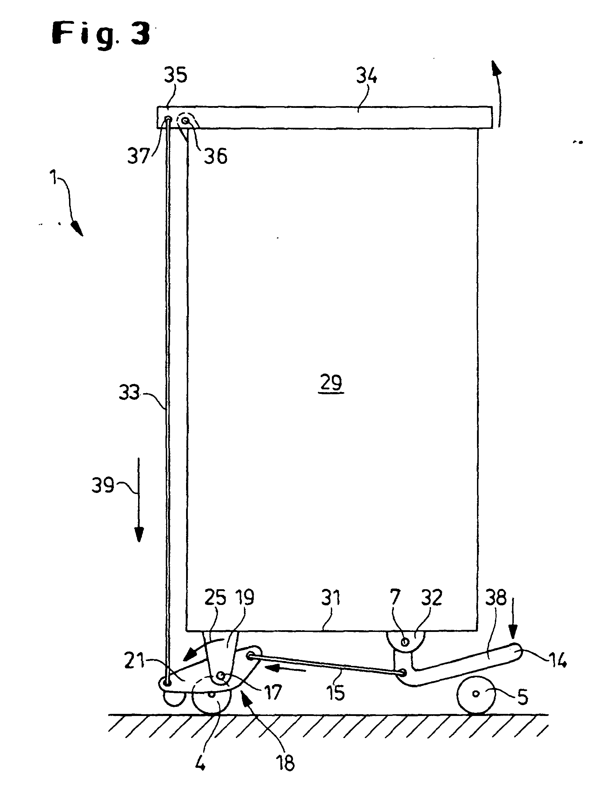

Die verfahr- und arretierbare Sammelvorrichtung 1 nach Figur 3 besteht im wesentlichen aus einem Behälter 29 mit einer Öffnung 41 sowie einem Boden 31, der integraler Bestandteil des Fahrgestells ist. Im Vergleich mit dem Ausführungsbeispiel nach Figur 1 ist erkennbar, daß der Boden 31 die Funktionen der Bodenplatte 2 übernimmt und unmittelbar die Achsaufnahme 19 des Bremshebels 18 sowie eine Achsaufnahme 32 für einen einseitigen Hebel 38 mit Fußteil 14 sowie die der Übersichtlichkeit halber nicht dargestellten Steckhülsen der Lenkrollen 4, 5 trägt. Die Funktionsweise der Bremseinrichtung stimmt mit der nach dem Ausführungsbeispiel gemäß Figur 1 überein.

Die Achsaufnahme 19 des Bremshebels 18 ist jedoch so nah am rückwärtigen Rand des Bodens 31 angeordnet, daß eine mit dem Hebelarm 21 gelenkig verbundene Zugstange 33 problemlos auf der Rückseite des Behälters 29 bis zu einem an seiner Oberseite scharnierten Tretdeckel 34 geführt werden kann. Der Tretdeckel 34 besitzt einen scharniernahen Ansatz 35, der den kürzeren Hebelarm des um eine Scharnierachse 36 drehbaren Tretdeckels 34 bildet. An einem Zugpunkt 37 des Ansatzes 35 ist die Zugstange 33 gelenkig befestigt. Aufgrund der Drehbewegung des Bremshebels 18 bewegt sich die Zugstange 33 beim Niedertreten des Fußteils 14 des einseitigen Hebels 38 in Richtung des Pfeiles 39 und öffnet damit gleichzeitig mit dem Wirksamwerden der Bremseinrichtung den Tretdeckel 34.

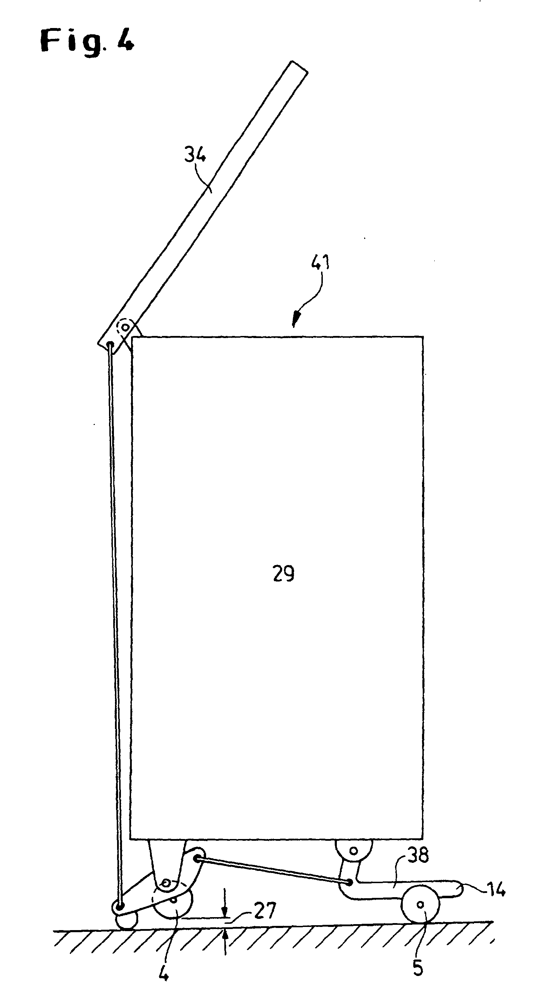

Figur 4 zeigt die Sammelvorrichtung nach Figur 3 bei niedergetretenem Fußteil 14 und geöffnetem Tretdeckel 34, der die Öffnung 41 des Behälters 29 freigibt.

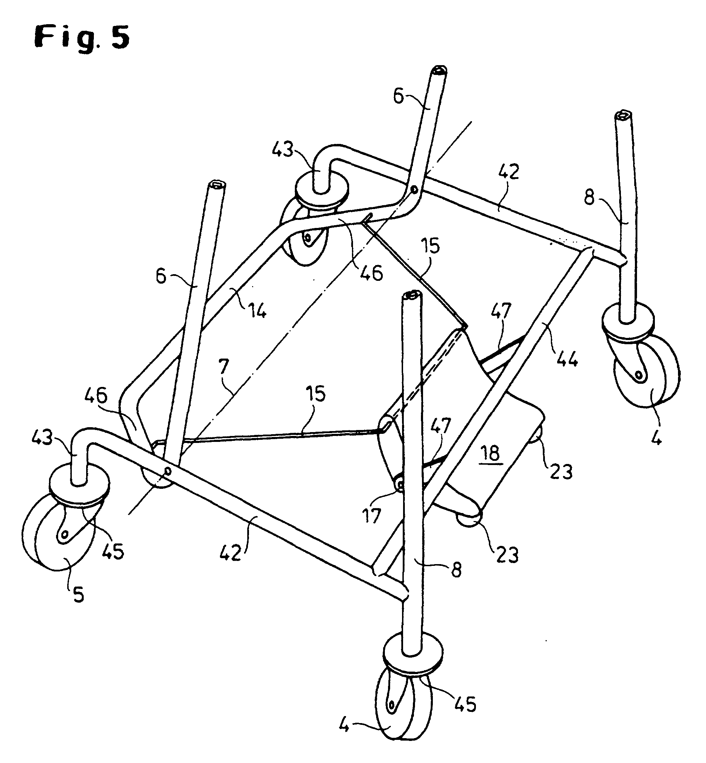

Die Ausführungsform nach Figur 5 ist entsprechend der Ausführungsform nach den Figuren 1 und 2 für einen als Sackhalter ausgebildeten Sammler vorgesehen. Der Aufbau des den oberen Sackrand haltenden, elastisch verformbaren Tragteils aus den Leisten 9, 11 und den Scharnieren 12 sowie die Befestigung des elastisch verformbaren Tragteils an dem L-förmigen Schwenkhebel 6 einerseits und den Holmen 8 andererseits stimmt mit dem Ausführungsbeispiel nach Figur 1 überein, so daß es hierzu keiner weiteren Erläuterungen bedarf. Unterschiede ergeben sich in erster Linie hinsichtlich des Fahrgestells und der Anordnung der Achsaufnahmen sowie der Steckhülsen daran. Das Fahrgestell wird durch zwei horizontal verlaufende Arme 42 mit abgebogenen Enden 43 gebildet, die über eine senkrecht zu den Armen 42 ebenfalls in der horizontalen Ebene verlaufende Verbindungsstrebe 44 auf Abstand gehalten werden. Parallel zu der Verbindungsstrebe 44 verläuft die Drehachse 7 des L-förmigen Schwenkhebels 6, der aufgrund seines durchgehenden Fußteils 14 ebenfalls zur Stabilität des Fahrgestells beiträgt. Die Lenkrollen 5 sind in Steckhülsen 45 drehbar gelagert, die unmittelbar in die rohrförmigen Enden der Holme 8 bzw. die abgebogenen Enden 43 der Arme 42 einsteckbar sind.

Von Seitenabschnitten 46 des L-förmigen Schwenkhebels 6 erstrecken sich zwei dort gelenkig angeordnete Betätigungsstangen 15 zu dem etwa mittig der Sammelvorrichtung angeordneten Bremshebel 18, der seitlich mit zwei kugelförmigen Bremsbelägen 23 bestückt ist.

Als Aufnahme für die Achse 17 des Bremshebels 18 sind an der Verbindungsstrebe 44 zwei Träger 47 drehfest angeordnet.

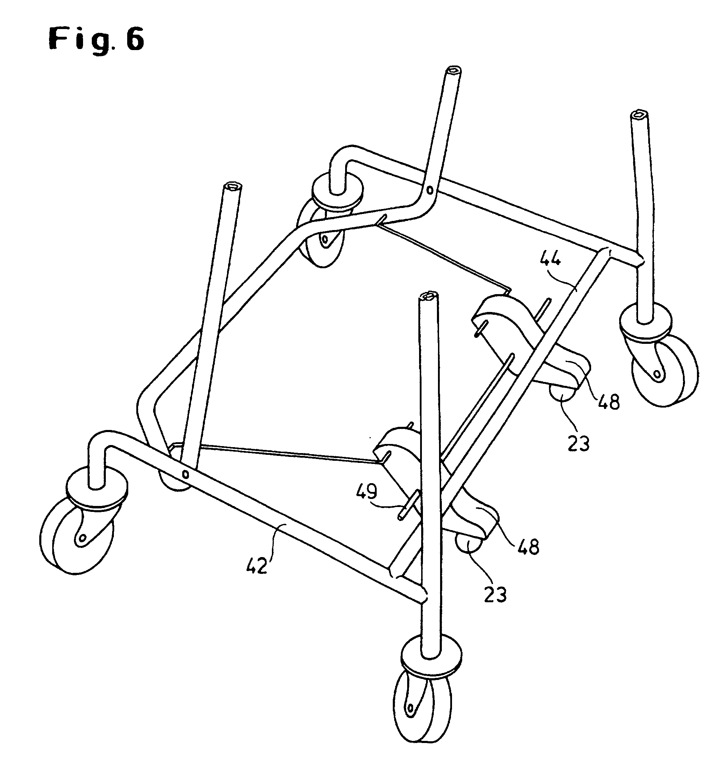

Figur 6 zeigt ein übereinstimmendes Fahrgestell, allerdings mit dem Unterschied, daß nicht nur ein Bremshebel 18, sondern zwei relativ schmale Bremshebel 48 um eine gemeinsame horizontale Achse 49 drehbar angeordnet sind. Die Achsaufnahmen entsprechen denen nach Figur 5, sind jedoch der Übersichtlichkeit halber nicht dargestellt. Jeder Bremshebel 48 trägt einen kugelförmigen oder anders geformten Bremsbelag 23.

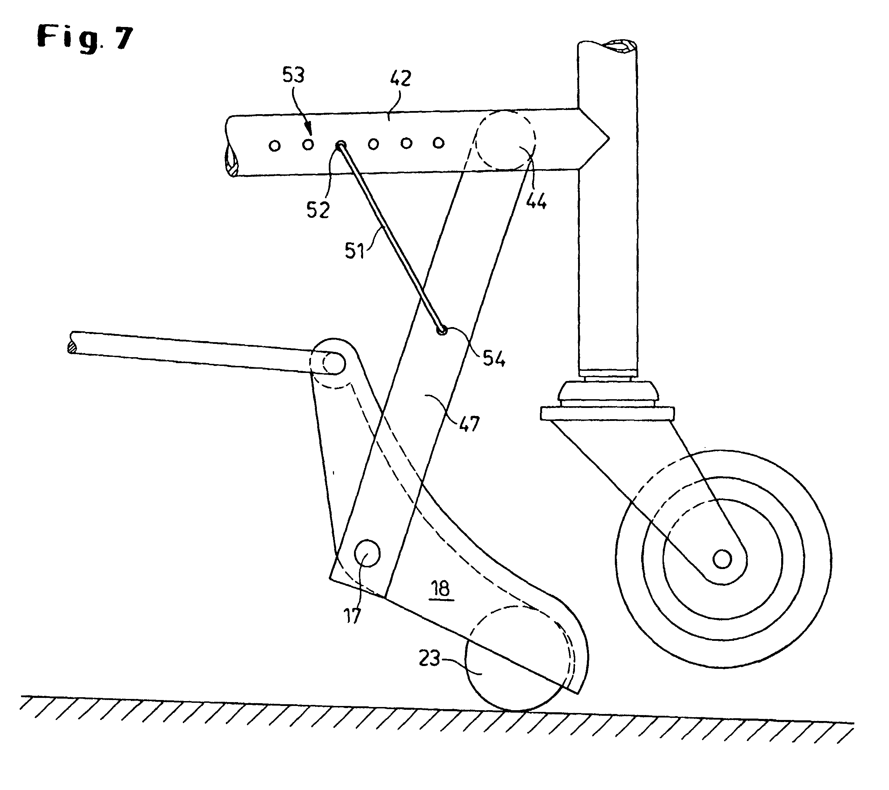

In Figur 7 sind die Träger 47 zur Aufnahme der Achse 17 des Bremshebels 18 nicht drehfest, sondern gelenkig an der Verbindungsstrebe 44 angeordnet. Die gelenkige Anordnung erlaubt ein Verschwenken der Träger 47 und damit eine Einstellung der Achslage des Bremshebels 18. Nach dem Verschwenken wird der Träger 47 mittels einer Strebe 51 verspannt, die einerseits in eine Öffnung 52 einer Lochreihe 53 und andererseits in eine Öffnung 54 an dem Träger 47 greift. Als alternative Einstellung kommt auch ein kontinuierlich verstellbarer Mechanismus, bspw. eine mittels Schelle an dem Arm 42 festlegbare Strebe oder ein Schieber in Betracht.

Analog zu der hier gezeigten Einstellung der Achslage des Bremshebels 18 kann auch die Achslage des L-förmigen Schwenkhebels 6 bzw. des einseitigen Hebels 38 eingestellt und anschließend fixiert werden.

### Bezugszeichenliste

| **Nr.** | **Bezeichnung** | **Nr.** | **Bezeichnung** |
|---|---|---|---|
| 1. | Verfahr- und arretierbare Sammelvorrichtung | 28. | Öffnung |
| 2. | Bodenplatte | 29. | Behälter |
| 3. | Steckhülsen Rollen | 30. | - |
| 4. | Lenkrollen | 31. | Boden |
| 5. | Lenkrollen | 32. | Achsaufnahme einseitiger Hebel |
| 6. | L-förmiger Schwenkhebel | 33. | Zugstange |
| 7. | Drehachse | 34. | Tretdeckel |
| 8. | Holme | 35. | Ansatz |
| 9. | Leiste | 36. | Scharnierachse |
| 10. | - | 37. | Zugpunkt |
| 11. | Leiste | 38. | einseitiger Hebel |
| 12. | Scharniere | 39. | Pfeil |
| 13. | Sack | 40. | - |
| 14. | Fußteil | 41. | Öffnung Behälter |
| 15. | Betätigungsstangen | 42. | Arme |
| 16. | Hebelarm | 43. | Abgebogenes Ende |
| 17. | Achse Bremshebel | 44. | Verbindungsstrebe |
| 18. | Bremshebel | 45. | Steckhülsen Rollen |
| 19. | Achsaufnahme Bremshebel | 46. | Seitenabschnitte |
| 20. | - | 47. | Träger |
| 21. | Hebelarm | 48. | Bremshebel (Schmal) |
| 22. | Boden | 49. | Achse Bremshebel |
| 23. | Kugelförmiger Bremsbelag | 50. | - |
| 24. | Pfeilrichtung | 51. | Strebe |
| 25. | Pfeilrichtung | 52. | Öffnung |
| 26. | Berührpunkt | 53. | Lochreihe |
| 27. | Hubweg | 54. | Öffnung |

## Patentansprüche

1. Verfahr- und arretierbare Sammelvorrichtung (1) mit einem Fahrgestell und einer einen Verschluß aufweisenden Öffnung, einem um eine horizontale, an dem Fahrgestell angeordnete Achse drehbaren Hebel mit einem Fußteil (14), der beim Niedertreten eine Bremseinrichtung gegen den Boden drückt und gleichzeitig den Verschluß öffnet, **dadurch gekennzeichnet,**
- **daß** der Hebel (6, 38) im Abstand von seiner Achse (7) in Richtung des Fußteiles (14) mit mindestens einer Betätigungsstange (15) gelenkig verbunden ist,
- **daß** jede Betätigungsstange (15) außerdem mit einem Hebelarm (16) eines zweiseitigen, um eine horizontale, an dem Fahrgestell angeordnete Achse (17) drehbaren Bremshebels (18, 48) gelenkig verbunden ist und
- **daß** an dem anderen Hebelarm (21) jedes Bremshebels (18, 48) auf den Boden (22) wirkende Mittel zum Bremsen (23) angeordnet sind.

2. Sammelvorrichtung nach Anspruch 1, **dadurch gekennzeichnet daß** der Sammler als Sackhalter und der Hebel (6) mit Fußteil (14) als zweiseitiger Schwenkhebel mit einem Schwenkteil ausgebildet ist, das in an sich bekannter Weise durch das Schwenken einen über der Öffnung (28) des Sacks (13) angeordneten Vorrichtungsdeckel oder ein den oberen Sackrand haltendes, elastisch verformbares Tragteil (9, 11, 12) öffnet bzw. schließt.

3. Sammelvorrichtung nach Anspruch 1, **dadurch gekennzeichnet, daß** der Sammler ein Behälter (29) mit seitlich scharniertem Tretdeckel (34) mit einem Ansatz (35) für ein Zugmittel (33) ist, das an seinem dem Ansatz (35) gegenüberliegenden Ende mit dem die Mittel zum Bremsen (23) tragenden Hebelarm (21) des Bremshebels (18, 48) bzw. von einem der Bremshebel verbunden ist.

4. Sammelvorrichtung nach Anspruch 3, **dadurch gekennzeichnet, daß** das Fahrgestell integraler Bestandteil des Behälters (29) ist, in dem unmittelbar an dessen Boden (31) Aufnahmen (32) für die Achse (7) des Hebels (38) mit Fußteil (14), die Achsen (17) jedes Bremshebels (18, 48) sowie für Befestigungsmittel (3) von Lenkrollen (4, 5) der Sammelvorrichtung angeordnet sind.

5. Sammelvorrichtung nach einem der Ansprüche 1 bis 4, **dadurch gekennzeichnet, daß** die Achslage jedes Bremshebels (18, 48) und/oder des Hebels (6) mit Fußteil (14) und/oder die Länge jeder Betätigungsstange (15) einstellbar ist.

6. Sammelvorrichtung nach Anspruch 5, **dadurch gekennzeichnet, daß** die Achslage jedes Bremshebels (18, 48) und/oder des Hebels (6) mit Fußteil (14) mittels am Fahrgestell schwenk- und unter unterschiedlichen Schwenkwinkeln fixierbar gelagerten Achsaufnahmen (47) einstellbar sind.

7. Sammelvorrichtung nach einem der Ansprüche 1 bis 6, **dadurch gekennzeichnet, daß** mehrere Bremshebel (48) um mindestens eine horizontale Achse (49) drehbar angeordnet sind und jeder Bremshebel (48) mit mindestens einer Betätigungsstange (15) gelenkig verbunden ist.

8. Sammelvorrichtung nach einem der Ansprüche 1 bis 7, **dadurch gekennzeichnet, daß** als Mittel zum Bremsen (23) mindestens ein reibungserhöhender Belag in Form von Leisten, Klötzen oder dergleichen je Bremshebel (18, 48) vorgesehen ist.

## Claims

1. A mobile and lockable collecting device (1) with a chassis and an opening having a closure, a lever with a foot part (14) that is rotatable about a horizontal axis arranged on the chassis, wherein the foot part presses against the floor upon stepping down on a braking device and simultaneously opens the closure,
**characterized in that**,
- the lever (6, 38) is linked at a distance from its axis (7) in a direction of the foot part (14) with at least one actuating rod (15);
- each actuating rod (15) is linked with a lever arm (16) of a two-sided braking lever (18, 48) that is rotatable about a horizontal axis (17) arranged on the chassis; and
- on the other lever arm (21) of each braking lever (18, 48), active means for braking (23) are arranged on the floor (22).

2. The collecting device according to claim 1, **characterized in that** the collector is formed as a bag holder and the lever (6) with the foot part (14) is formed as a two-sided pivoting lever with a pivoting part, which opens or closes in a known manner by means of pivoting of an apparatus cover arranged over the opening (28) of the bag (13) or an elastically deformable load-carrying portion (9, 11, 12) holding an upper edge of the bag.

3. The collecting device according to claim 1, **characterized in that** the collector is a container (29) with a transverse, hinged foot cover (34) with a shoulder (35) for a tensioning means (33), which is connected on its end opposite the shoulder (35) with the lever arm (21) of the braking lever (18, 48) or by one of the braking levers supporting the means for braking (23).

4. The collecting device according to claim 3, **characterized in that** the chassis is an integral component of the container (29), in which directly on its floor (31), mountings (32) for the axis (7) of the lever (38) with the foot part (14), the axes (17) of each braking lever (18, 48), as well as for attachment means (3) of castors (4, 5) of the collecting device are arranged.

5. The collecting device according to one of claims 1 through 4, **characterized in that** the axial position of each braking lever (18, 48) and/or the lever (6) with the foot part (14) and/or the length of each actuating rod (15) can be adjusted.

6. The collecting device according to claim 5, **characterized in that** the axial position of each braking lever (18, 48) and/or the lever (6) with the foot part (14) can be adjusted by means of axial mountings (47) fixably mounted on the chassis pivotably and with varying pivoting angles.

7. The collecting device according to one of claims 1 through 6, **characterized in that** multiple braking levers (48) are rotatably arranged about at least one horizontal axis (49) and each braking lever (48) is linked with at least one actuating rod (15).

8. The collecting device according to one of claims 1 through 7, **characterized in that** as a means for braking (23), at least one friction-increasing coating in the form of ridges, blocks or the like is provided for each braking lever (18, 48).

## Revendications

1. Dispositif collecteur déplaçable et bloquable (1) comportant un châssis et une ouverture présentant une fermeture, un levier pouvant pivoter autour d'un axe horizontal et disposé sur le châssis comportant une pédale (14) qui, lorsqu'elle est enfoncée, comprime un dispositif de freinage contre le sol et ouvre en même temps la fermeture,
**caractérisé en ce que**
- le levier (6, 38) est relié de manière articulée à distance de son axe (7) dans le sens de la pédale (14) à au moins une barre d'actionnement (15),
- chaque barre d'actionnement (15) est en outre reliée de manière articulée à un bras de levier (16) d'un levier de frein bilatéral (18, 48) pivotable autour d'un axe horizontal (17) et disposé sur le châssis et
- que sur l'autre bras de levier (21) de chaque levier de frein (18, 48) sont disposés des moyens agissant sur le sol (22) pour le freinage (23).

2. Dispositif collecteur selon la revendication 1, **caractérisé en ce que** le collecteur se présente sous forme d'un support de sac et le levier (6) à pédale (14) sous forme d'un levier pivotant bilatéral comportant une partie pivotante qui ouvre ou ferme de manière connue en soi par pivotement un couvercle du dispositif disposé au dessus de l'ouverture (28) du sac (13) ou une pièce porteuse (9, 11, 12) déformable élastiquement maintenant le bord supérieur du sac.

3. Dispositif collecteur selon la revendication 1, **caractérisé en ce que** le collecteur est un récipient (29) comportant un couvercle à pédale (34) à charnières latérales comportant une embase (35) pour un moyen de traction (33) qui est relié à son extrémité opposée à l'embase (35) au bras de levier (21) supportant les moyens de freinage (23) du levier de frein (18, 48) ou d'un des leviers de freins.

4. Dispositif collecteur selon la revendication 3, **caractérisé en ce que** le châssis fait partie intégrante du récipient (29), dans lequel sont disposés directement sur son fond (31) des supports (32) pour l'axe (7) du levier (38) à pédale (14), les axes (17) de chaque levier de frein (18, 48) ainsi que pour des moyens de fixation (3) de rouleaux de direction (4, 5) du dispositif collecteur.

5. Dispositif collecteur selon l'une quelconque des revendications 1 à 4, **caractérisé en ce que** la position de l'axe de chaque levier de frein (18, 48) et/ou du levier (6) à pédale (14) et/ou la longueur de chaque barre d'actionnement (15) sont réglables.

6. Dispositif collecteur selon la revendication 5, **caractérisé en ce que** la position de l'axe de chaque levier de frein (18, 48) et/ou du levier (6) à pédale (14) sont réglables au moyen de supports d'axes (47) installés de manière à pouvoir pivoter et être fixés suivant différents angles de pivotement sur le châssis.

7. Dispositif collecteur selon l'une quelconque des revendications 1 à 6, **caractérisé en ce que** plusieurs leviers de freins (48) sont disposés de manière à pouvoir tourner autour d'au moins un axe horizontal (49) et que chaque levier de frein (48) est relié de manière articulée à au moins une barre d'actionnement (15).

8. Dispositif collecteur selon l'une quelconque des revendications 1 à 7, **caractérisé en ce que** sont prévus par levier de frein (18, 48) comme moyens de freinage (23) au moins une garniture augmentant le frottement sous forme de baguettes, sabots ou similaires.
